# EUROPEAN PATENT APPLICATION

(11) **EP 4 064 013 A1**
(43) Date of publication of application: **28.09.2022**
(21) Application number: 21194208.1
(22) Date of filing: 01.09.2021
(51) Int. Cl.: G06F 3/0481, G06F 3/04886, G06F 3/04817, G06F 3/0486

(54) **INFORMATION PROCESSING SYSTEM, PROGRAM, AND INFORMATION PROCESSING METHOD**

(30) Priority: 26.03.2021 JP 2021054218
(71) Applicant: FUJIFILM Business Innovation Corp., Minato-ku Tokyo (JP)
(72) Inventor: Kawano, Yusuke, Yokohama-shi (JP)
(74) Representative: Becker, Eberhard

(57) **Abstract**

An information processing system includes a processor configured to: in a case where only a part of a space for work in which an icon is arranged is displayed on a display, reduce a display magnification of the space for work upon detection of a specific operation of changing a position of the icon.

## Description

### BACKGROUND OF THE INVENTION

### (i) Field of the Invention

The present invention relates to an information processing system, a program, and an information processing method.

### (ii) Description of Related Art

A service for collectively arranging documents of work in progress in a virtual space prepared on a cloud storage is present. Hereinafter, this space for work will be referred to as a "workspace". The workspace is managed by an application program (hereinafter, referred to as an "app" or a "program") and can be accessed from a plurality of devices.

In the workspace, an icon (hereinafter, referred to as a "thumbnail") that is a reduced image of a head page of each document, or an icon representing a type of document can be arranged at any location or section designated by a user. In this sense, the workspace is represented as a virtual workbench.

### SUMMARY OF THE INVENTION

In a case where the user displays the workspace on a display used for work, the entire workspace is not always displayed on the display. In this case, the thumbnail or the like displayed on the display may be wanted to be moved to a position not displayed on the display.

JP6217318B discloses a technology for specifying a group as a movement destination in accordance with a speed or a movement distance of the thumbnail or the like in a drag direction on an assumption that the user perceives the entire image of the workspace in advance.

However, the user does not always perceive the entire image of the workspace. In this case, the user needs to perform a drag operation on the thumbnail or the like after performing a work of reducing a display size of the workspace to a size in which the movement destination can be perceived.

An object of the present invention is to facilitate, in a case where a user who does not perceive the entire image of a space for work moves an icon displayed on a display to a part not displayed on the display in a state where only a part of the space for work in which the icon is arranged is displayed on the display, movement of the icon to the part not displayed on the display compared to a case where an opportunity to perceive information about the part not displayed on the display is not provided during movement of the icon.

According to a first aspect of the present disclosure, there is provided an information processing system including a processor configured to: in a case where only a part of a space for work in which an icon is arranged is displayed on a display, reduce a display magnification of the space for work upon detection of a specific operation of changing a position of the icon.

According to a second aspect of the present disclosure, there is provided the information processing system according to the first aspect, in which the processor may be configured to gradually reduce the display magnification.

According to a third aspect of the present disclosure, there is provided the information processing system according to the second aspect, in which the processor may be configured to control reduction of the display magnification in accordance with the position of the icon on the display.

According to a fourth aspect of the present disclosure, there is provided the information processing system according to the second aspect, in which the processor may be configured to increase a speed of a change in the display magnification in a case where the icon is positioned near an end portion of the display, compared to a case where the icon is positioned near a center of the display.

According to a fifth aspect of the present disclosure, there is provided the information processing system according to the second aspect, in which the processor may be configured to reduce the display magnification faster than movement of the icon.

According to a sixth aspect of the present disclosure, there is provided the information processing system according to the first aspect, in which the processor may be configured to switch to a magnification at which the entire space for work is displayable on the display.

According to a seventh aspect of the present disclosure, there is provided the information processing system according to the second or sixth aspect, in which the processor may be configured to also reduce a size of the icon in accordance with reduction of the display magnification.

According to an eighth aspect of the present disclosure, there is provided the information processing system according to the sixth aspect or the seventh aspect citing the sixth aspect, in which the processor may be configured to forcibly move the icon to near a center of the display.

According to a ninth aspect of the present disclosure, there is provided the information processing system according to any one of the first to eighth aspects, in which the specific operation may be an operation of moving the icon to a position further than a predetermined distance from the first position.

According to a tenth aspect of the present disclosure, there is provided the information processing system according to any one of the first to eighth aspects, in which the specific operation may be an operation of moving the icon to a position within a predetermined distance from an end portion of the display.

According to an eleventh aspect of the present disclosure, there is provided the information processing system according to any one of the first to eighth aspects, in which the specific operation may be an operation of moving the icon at a speed faster than a predetermined threshold value.

According to a twelfth aspect of the present disclosure, there is provided the information processing system according to any one of the first to eighth aspects, in which the specific operation may be an operation of moving the icon in a direction in which another icon that is not displayed on the display is present.

According to a thirteenth aspect of the present disclosure, there is provided the information processing system according to the first aspect, in which the processor may be configured to add an operator for reducing the display magnification around the icon, upon detection of the operation of changing the position of the icon.

According to a fourteenth aspect of the present disclosure, there is provided the information processing system according to the thirteenth aspect, in which the processor may be configured to, in a case where the icon is overlaid on the operator, execute reduction of the display magnification.

According to a fifteenth aspect of the present disclosure, there is provided the information processing system according to the thirteenth or fourteenth aspect, in which the processor may be configured to gradually reduce the display magnification while the icon is overlaid on the operator.

According to a sixteenth aspect of the present disclosure, there is provided the information processing system according to the thirteenth aspect, in which the processor may be configured to, in a case where the icon moves in a direction of separating from the operator by a predetermined distance or more, cause the operator to follow movement of the icon.

According to a seventeenth aspect of the present disclosure, there is provided the information processing system according to the first aspect, in which the processor may be configured to, in a case where a size of the space for work after the reduction becomes smaller than the display: return the display magnification of the space for work to a magnification before the reduction, and perform superimposed display of an image in which the entire space for work is reduced, on the display.

According to an eighteenth aspect of the present disclosure, there is provided the information processing system according to the first aspect, in which the processor may be configured to perform superimposed display of an image in which the entire space for work is reduced, on the display upon detection of the operation of changing the position of the icon.

According to a nineteenth aspect of the present disclosure, there is provided the information processing system according to the seventeenth or eighteenth aspect, in which the processor may be configured to, in a case where a speed of movement of the icon is less than a predetermined speed, retract the image in which the entire space for work is reduced, from a direction of movement of the icon.

According to a twentieth aspect of the present disclosure, there is provided the information processing system according to the seventeenth or eighteenth aspect, in which the processor may be configured to, in a case where a speed of movement of the icon is faster than a predetermined speed, permit movement of the icon onto the image in which the entire space for work is reduced.

According to a twenty-first aspect of the present disclosure, there is provided the information processing system according to the first aspect, in which the processor may be configured to, in a case where movement of the icon stops for a predetermined time period or more, perform superimposed display of an image in which only a surrounding area of the icon is enlarged.

According to a twenty-second aspect of the present disclosure, there is provided the information processing system according to the first aspect, in which the processor may be configured to, in a case where movement of the icon stops for a predetermined time period or more, return the display magnification of the space for work to a magnification before the reduction.

According to a twenty-third aspect of the present disclosure, there is provided a program causing a computer to implement a function of detecting, in a case where only a part of a space for work in which an icon is arranged is displayed on a display, a specific operation of changing a position of the icon, and a function of reducing a display magnification of the space for work upon detection of the specific operation.

According to a twenty-fourth aspect of the present disclosure, there is provided an information processing method including detecting, in a case where only a part of a space for work in which an icon is arranged is displayed on a display, a specific operation of changing a position of the icon, and reducing a display magnification of the space for work upon detection of the specific operation.

According to the first aspect of the present disclosure, in a case where a user who does not perceive the entire image of the space for work moves the icon displayed on the display to a part not displayed on the display in a state where only the part of the space for work in which the icon is arranged is displayed on the display, movement of the icon to the part not displayed on the display can be facilitated compared to a case where an opportunity to perceive information about the part not displayed on the display is not provided during movement of the icon.

According to the second aspect of the present disclosure, information related to a movement destination of the icon can be presented during movement of the icon.

According to the third aspect of the present disclosure, presentation of the information related to the movement destination of the icon can be controlled in accordance with the position of the moving icon.

According to the fourth aspect of the present disclosure, the information related to the movement destination can be presented before the icon reaches an outer edge of the display.

According to the fifth aspect of the present disclosure, the information related to the movement destination of the icon can be presented in accordance with the speed of movement of the icon.

According to the sixth aspect of the present disclosure, information about the entire space for work can be presented during movement of the icon.

According to the seventh aspect of the present disclosure, perception of a relationship in arrangement between an icon of a target of movement and other icons can be facilitated.

According to the eighth aspect of the present disclosure, perception of the relationship in arrangement between the icon of the target of movement and the other icons can be facilitated.

According to the ninth aspect of the present disclosure, the display magnification can be reduced only in a case where there is a possibility of movement to an outside of the displayed part.

According to the tenth aspect of the present disclosure, the display magnification can be reduced only in a case where there is a possibility of movement to the outside of the displayed part.

According to the eleventh aspect of the present disclosure, the display magnification can be reduced only in a case where there is a possibility of movement to the outside of the displayed part.

According to the twelfth aspect of the present disclosure, the display magnification can be reduced only in a case where reduction is meaningful for presentation of information outside the displayed part.

According to the thirteenth aspect of the present disclosure, the user can issue an instruction for a timing at which the display magnification is reduced.

According to the fourteenth aspect of the present disclosure, the display magnification can be reduced only in a case where an explicit instruction of the user is present.

According to the fifteenth aspect of the present disclosure, the user can adjust the display magnification.

According to the sixteenth aspect of the present disclosure, the user can decide the timing at which the display magnification is reduced.

According to the seventeenth aspect of the present disclosure, a positional relationship between the icon being moved and the entire space for work can be checked.

According to the eighteenth aspect of the present disclosure, the positional relationship between the icon being moved and the entire space for work can be checked.

According to the nineteenth aspect of the present disclosure, checking of the movement destination of the icon can be facilitated.

According to the twentieth aspect of the present disclosure, the icon can be moved to an intended position in a short time period.

According to the twenty-first aspect of the present disclosure, the icon can be accurately moved to an intended location.

According to the twenty-second aspect of the present disclosure, the icon can be accurately moved to the intended location.

According to the twenty-third aspect of the present disclosure, in a case where the user who does not perceive the entire image of the space for work moves the icon displayed on the display to the part not displayed on the display in a state where only the part of the space for work in which the icon is arranged is displayed on the display, movement of the icon to the part not displayed on the display can be facilitated compared to a case where the opportunity to perceive the information about the part not displayed on the display is not provided during movement of the icon.

According to the twenty-fourth aspect of the present disclosure, in a case where the user who does not perceive the entire image of the space for work moves the icon displayed on the display to the part not displayed on the display in a state where only the part of the space for work in which the icon is arranged is displayed on the display, movement of the icon to the part not displayed on the display can be facilitated compared to a case where the opportunity to perceive the information about the part not displayed on the display is not provided during movement of the icon.

### BRIEF DESCRIPTION OF THE DRAWINGS

Exemplary embodiment(s) of the present invention will be described in detail based on the following figures, wherein:

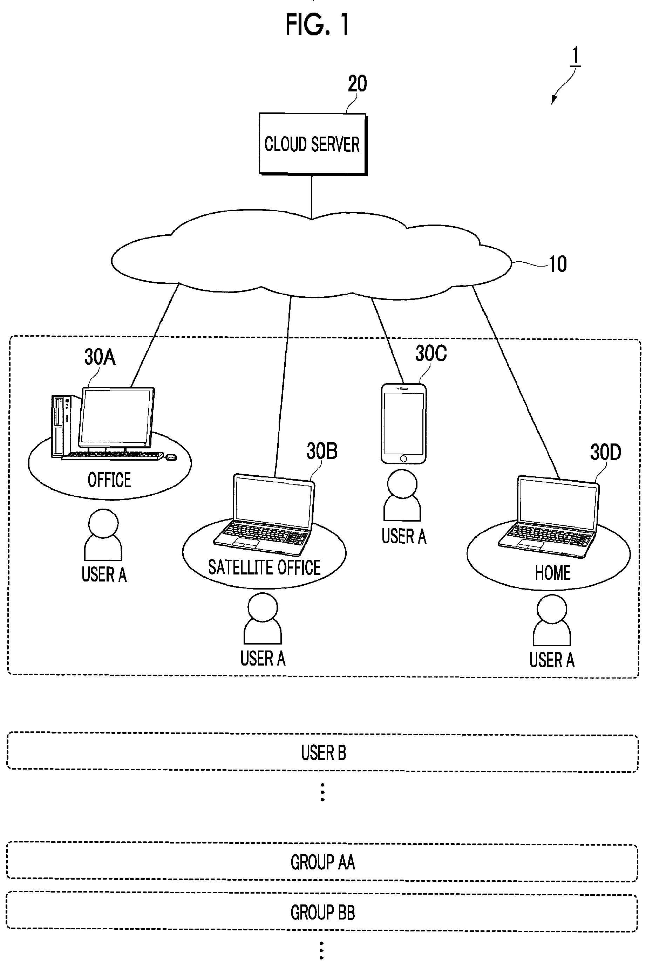

Fig. 1 is a diagram for describing a summary of a cloud system that provides a service for a workspace;

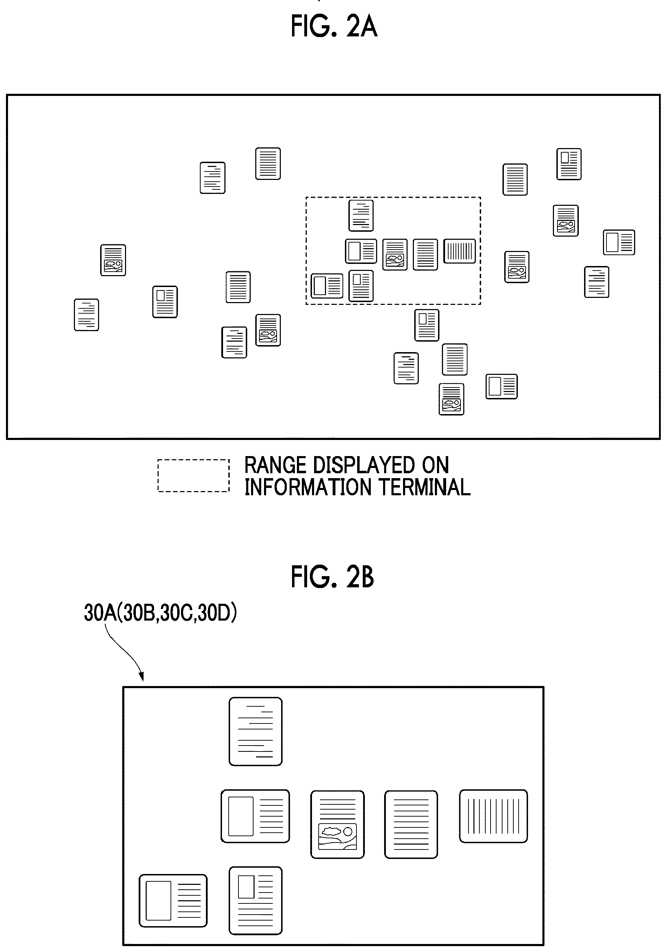

Figs. 2A and 2B are diagrams for describing a relationship between the entire workspace and a work screen: Fig. 2A illustrates a relationship between the entire workspace and a range displayed on an information terminal, and Fig. 2B illustrates an example of the work screen displayed on the information terminal;

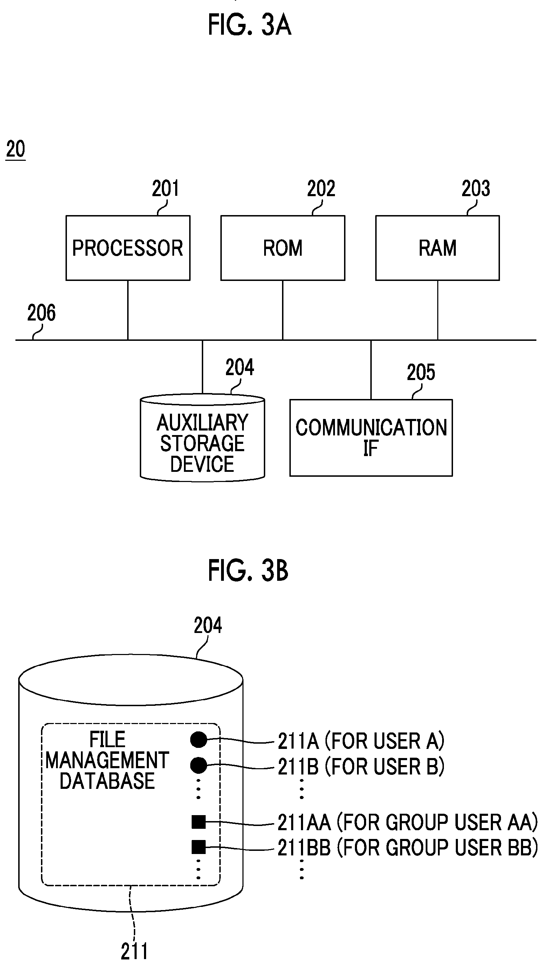

Figs. 3A and 3B are diagrams for describing a hardware configuration example of a cloud server used in Exemplary Embodiment 1: Fig. 3A illustrates an example of a hardware configuration, and Fig. 3B illustrates a structure example of data stored in an auxiliary storage device;

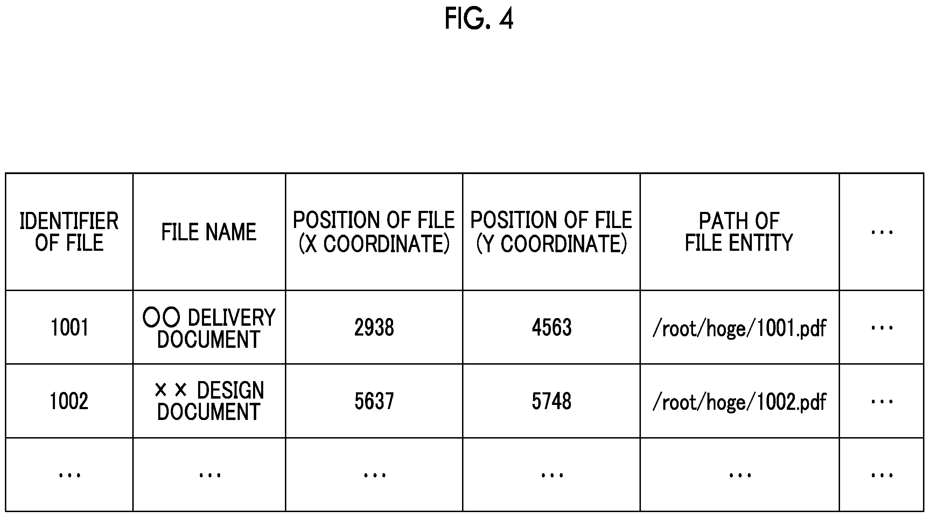

Fig. 4 is a diagram illustrating a data example of a file management database;

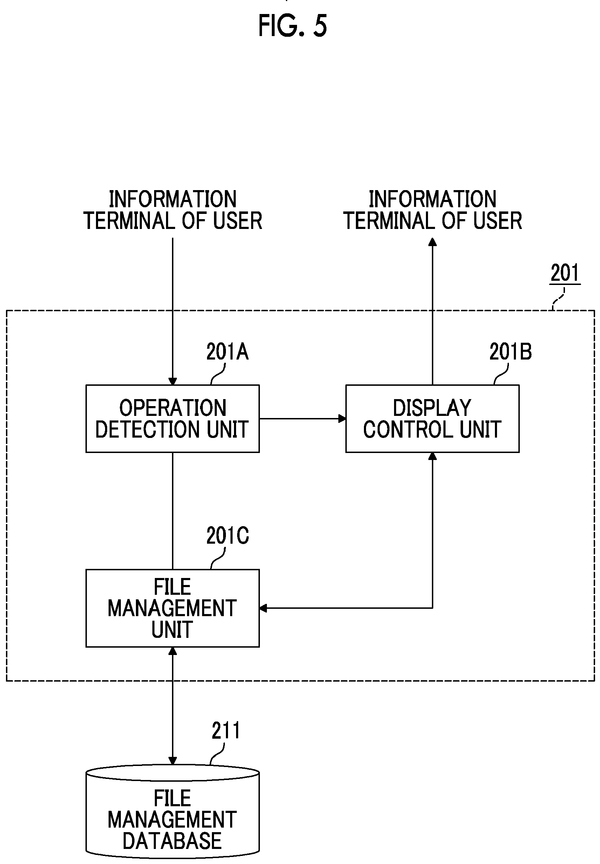

Fig. 5 is a diagram for describing a functional configuration example of the cloud server used in Exemplary Embodiment 1;

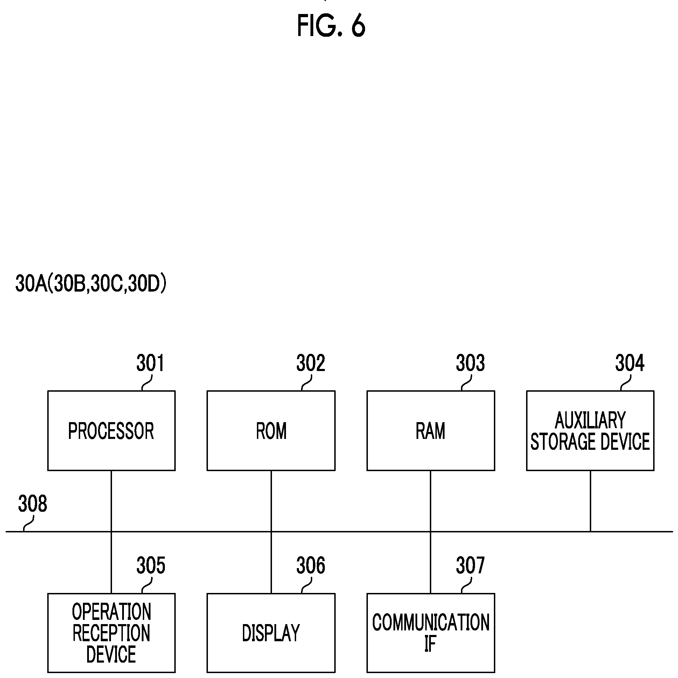

Fig. 6 is a diagram for describing a hardware configuration example of the information terminal used in Exemplary Embodiment 1;

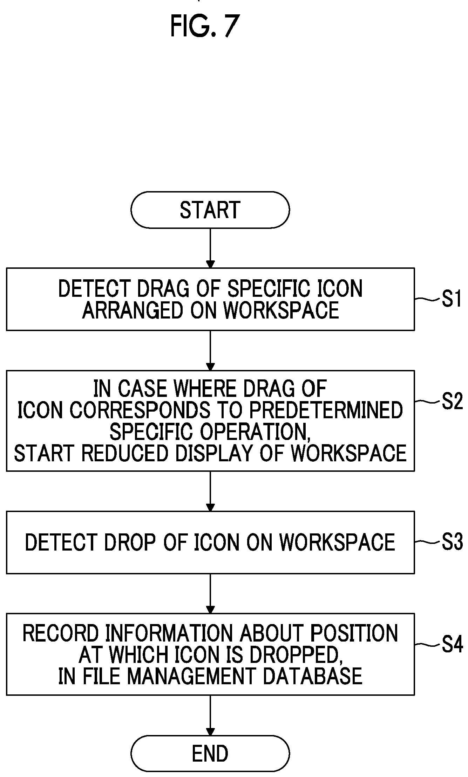

Fig. 7 is a flowchart for describing an example of a processing operation performed by the cloud server in Exemplary Embodiment 1;

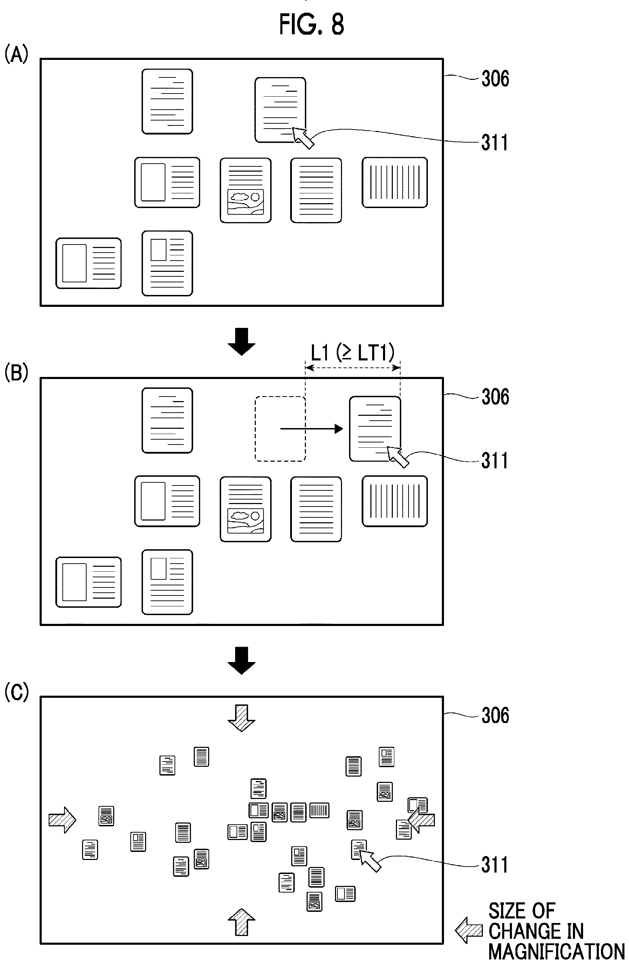

Fig. 8 is a diagram for describing an example of reduced display of the workspace in a case where a distance L1 of drag is greater than or equal to a predetermined distance LT1: (A) illustrates a display screen at a point in time of a start of the drag, (B) illustrates the display screen immediately before a start of the reduced display, and (C) illustrates the display screen after the reduced display;

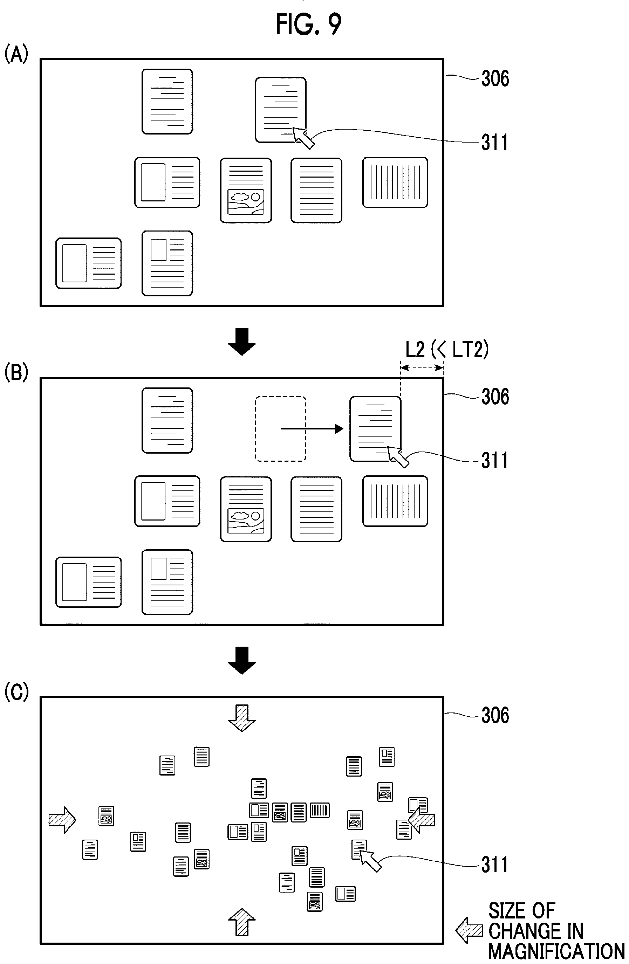

Fig. 9 is a diagram for describing an example of the reduced display of the workspace in a case where a distance L2 between an icon of a target of the drag and an end portion of a display is less than a distance LT2: (A) illustrates the display screen at the point in time of the start of the drag, (B) illustrates the display screen immediately before the start of the reduced display, and (C) illustrates the display screen after the reduced display;

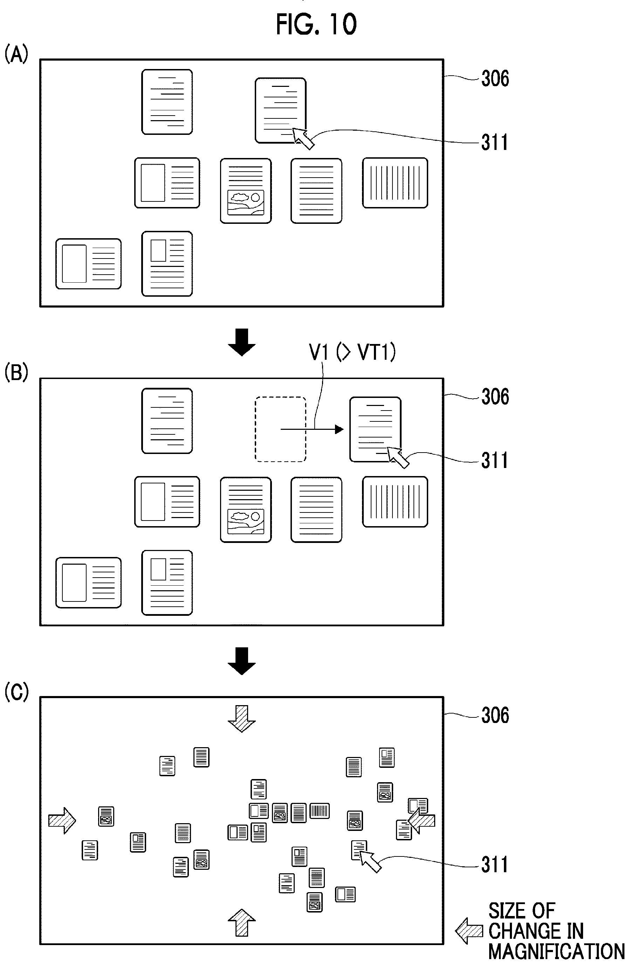

Fig. 10 is a diagram for describing an example of the reduced display of the workspace in a case where a speed V1 of the drag is greater than or equal to a predetermined speed VT1: (A) illustrates the display screen at the point in time of the start of the drag, (B) illustrates the display screen immediately before the start of the reduced display, and (C) illustrates the display screen after the reduced display;

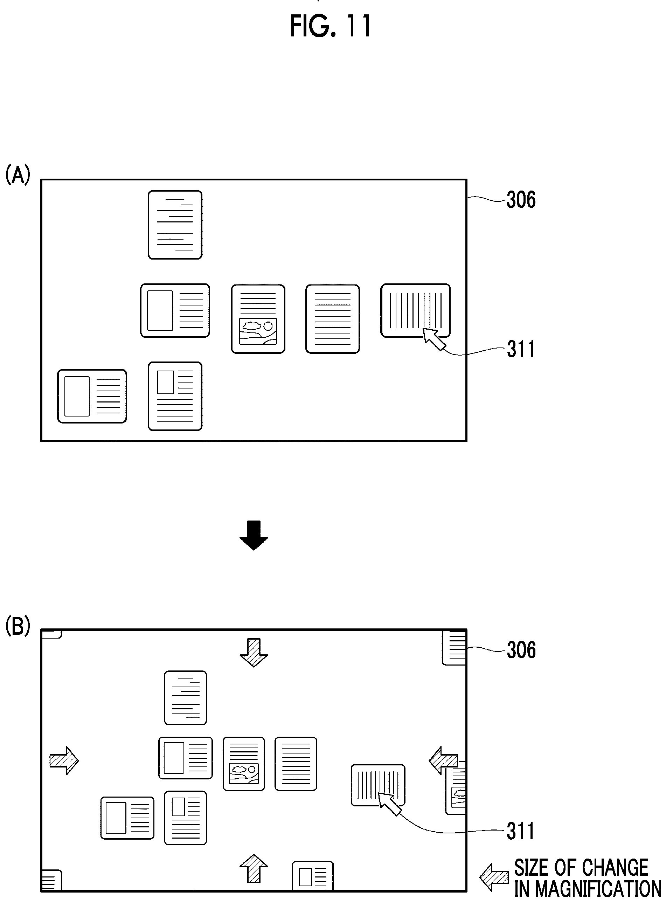

Fig. 11 is a diagram for describing an example of the reduced display of the workspace in a case where another icon is present in a direction of the drag: (A) illustrates the display screen at the point in time of the start of the drag, and (B) illustrates the display screen after the reduced display in a case where the other icon is present in the direction of the drag;

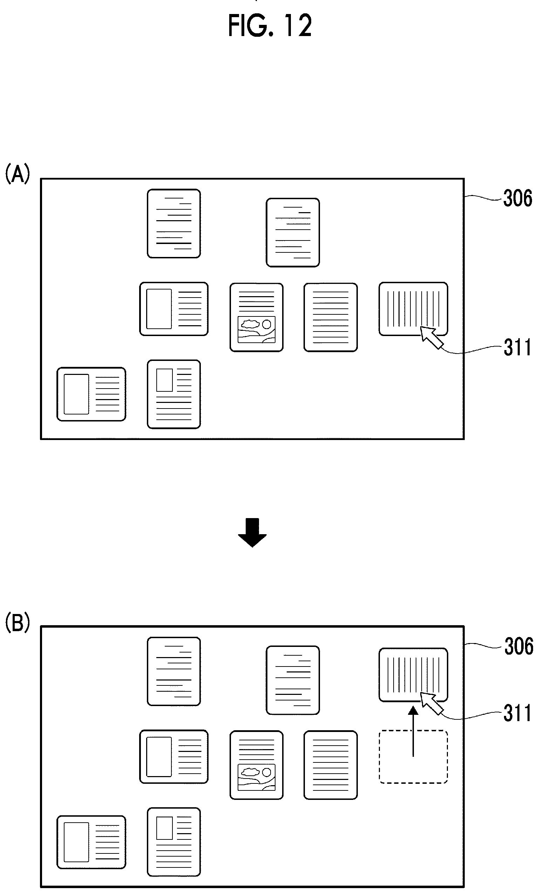

Fig. 12 is a diagram for describing an example of the reduced display of the workspace in a case where the other icon is not present in the direction of the drag: (A) illustrates the display screen at the point in time of the start of the drag, and (B) illustrates the display screen in a case where the other icon is not present in the direction of the drag;

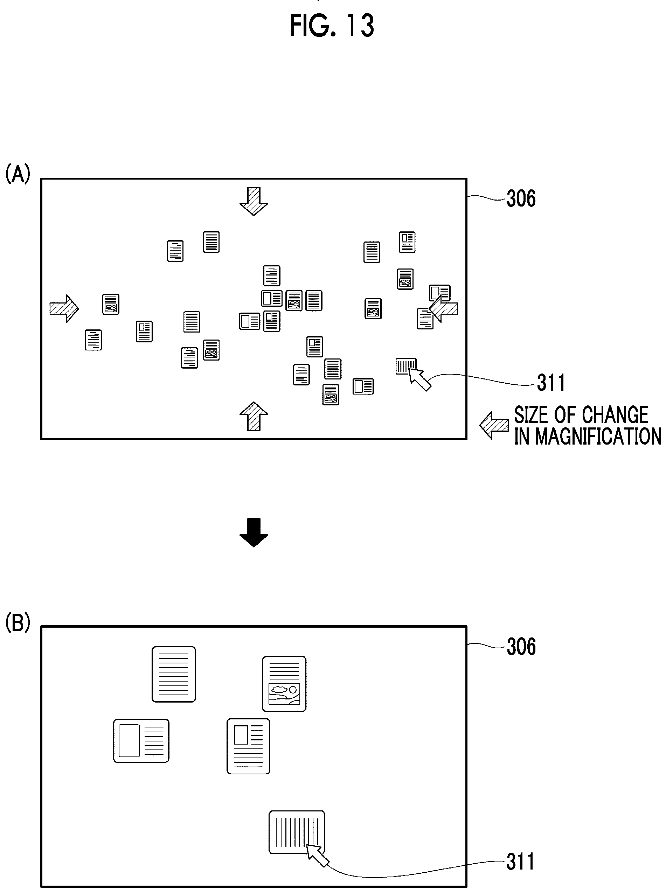

Fig. 13 is a diagram for describing an example of a change in display magnification of the workspace in a case where an icon being dragged stops at a specific position, or a case where the icon is dropped: (A) illustrates a display example during the drag, and (B) illustrates a display example in a case where, for example, the icon stops at the specific position;

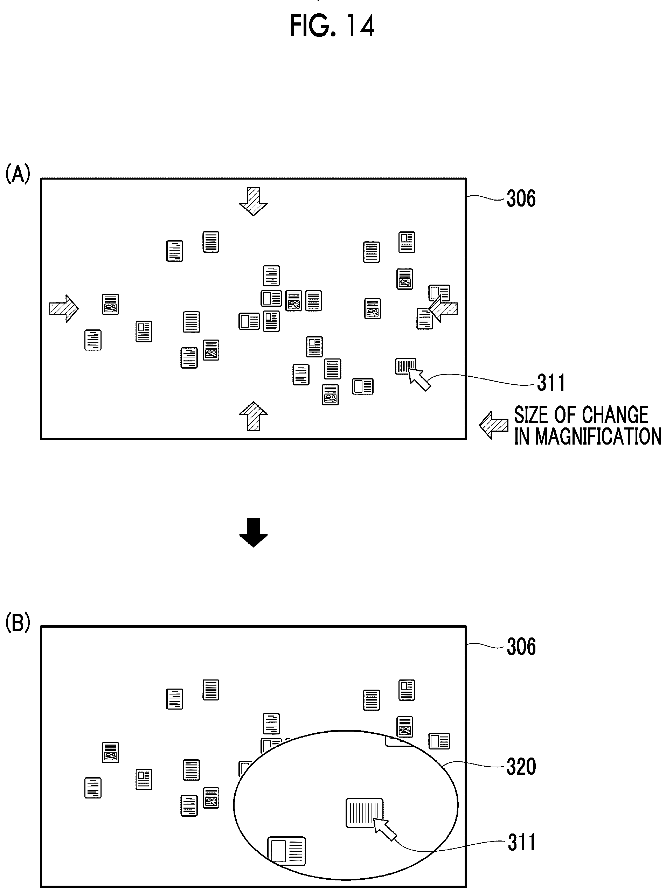

Fig. 14 is a diagram for describing another example of the change in display magnification of the workspace in a case where the icon being dragged stops at the specific position: (A) illustrates a display example during the drag, and (B) illustrates a display example in a case where, for example, the icon stops at the specific position;

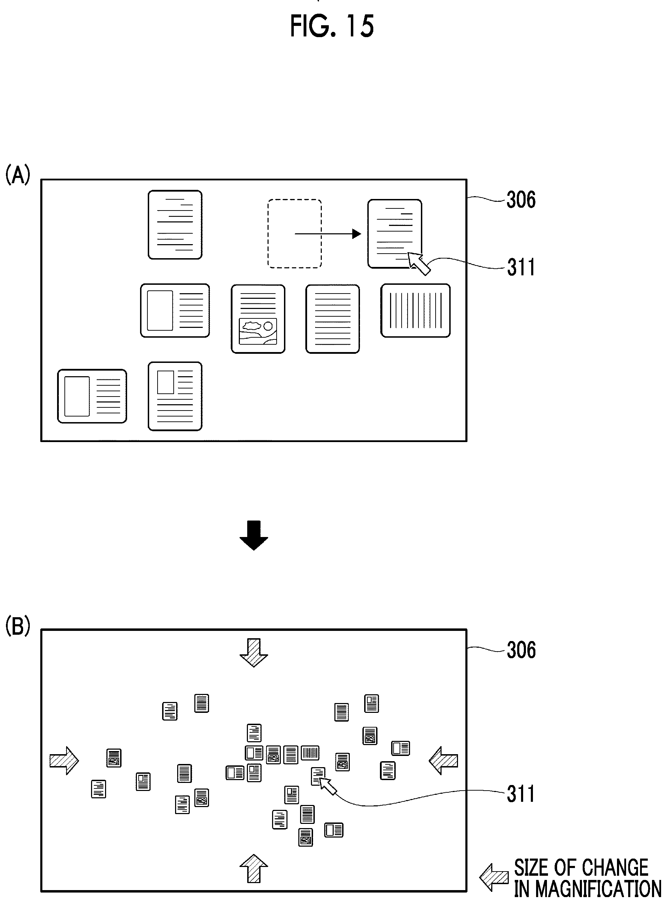

Fig. 15 is a diagram for describing another example of the reduced display in a case where the drag of the icon corresponds to a specific operation: (A) illustrates the display screen at the point in time of the start of the drag, and (B) illustrates the display screen after switching to a magnification at which the entire workspace is displayed on the display;

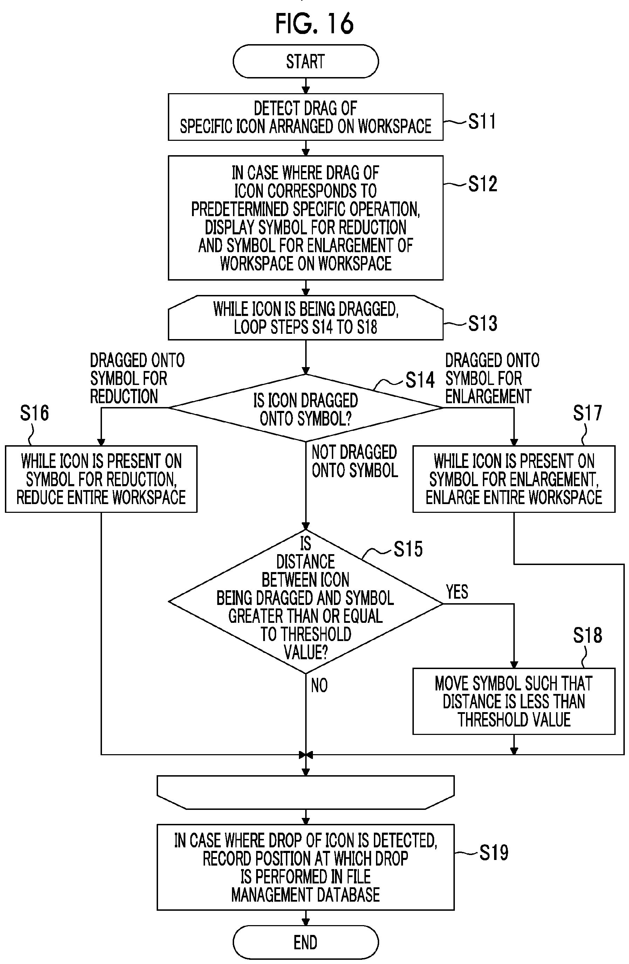

Fig. 16 is a flowchart for describing an example of a processing operation performed by a cloud server in Exemplary Embodiment 2;

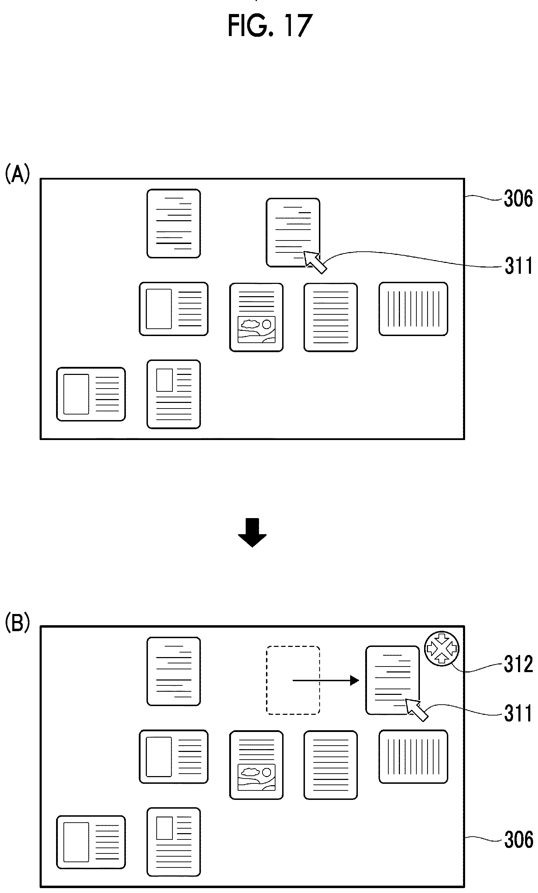

Fig. 17 is a diagram for describing an example of displaying only a symbol for reduction in a case where the drag of the icon is detected: (A) illustrates the display screen at the point in time of the start of the drag, and (B) illustrates a state where the symbol for reduction is displayed on the display as a result of detecting the drag of the icon performed using a cursor;

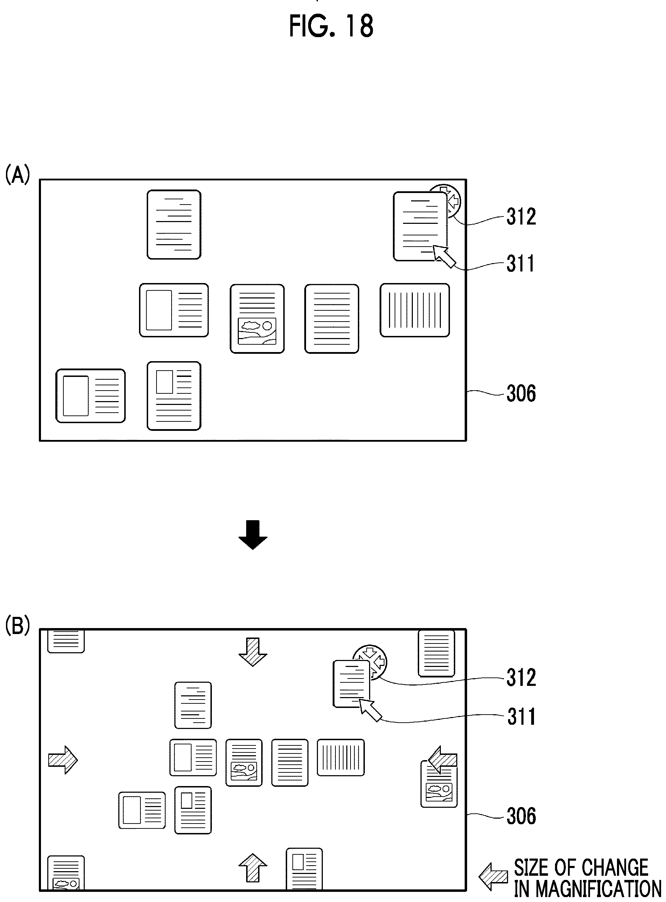

Fig. 18 is a diagram for describing the reduced display of the workspace using the symbol for reduction: (A) illustrates a state where the icon is overlaid on the symbol for reduction, and (B) illustrates a state where the reduced display of the workspace continues;

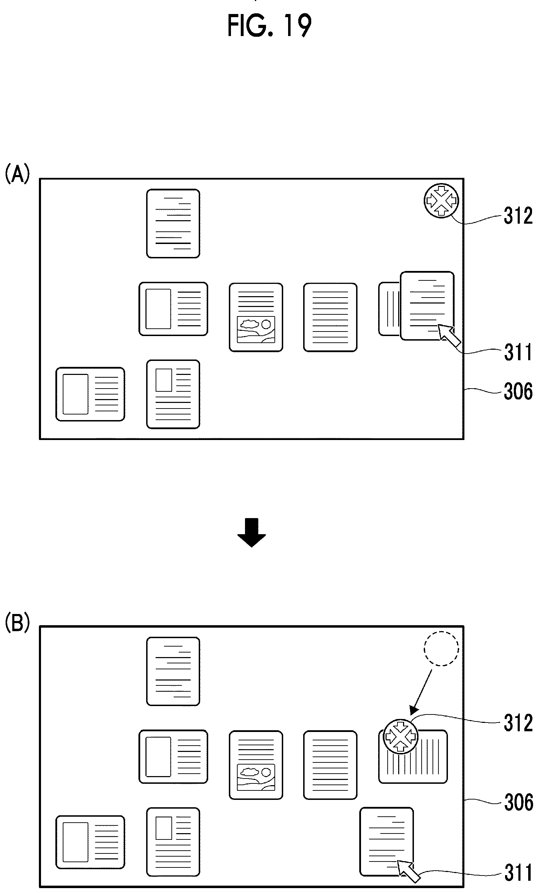

Fig. 19 is a diagram for describing following of the symbol for reduction in a case where the icon is dragged in a direction of separating from the symbol for reduction: (A) illustrates the drag of the icon in a state where the symbol for reduction is displayed, and (B) illustrates a state of following of the symbol for reduction in a drag direction of the icon;

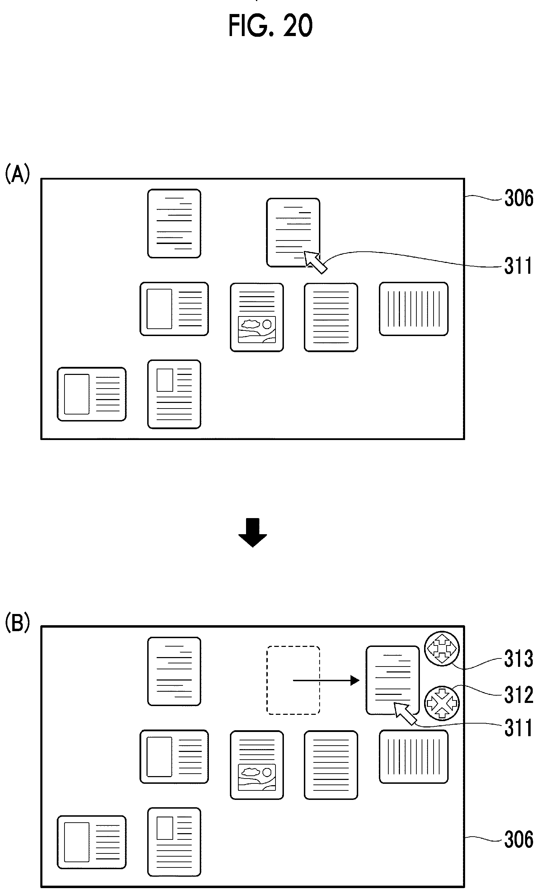

Fig. 20 is a diagram for describing an example in which both of the symbol for reduction and a symbol for enlargement are displayed in a case where the drag of the icon is detected: (A) illustrates the display screen at the point in time of the start of the drag, and (B) illustrates a state where the symbol for reduction and the symbol for enlargement are displayed on the display as a result of detecting the drag of the icon performed using the cursor;

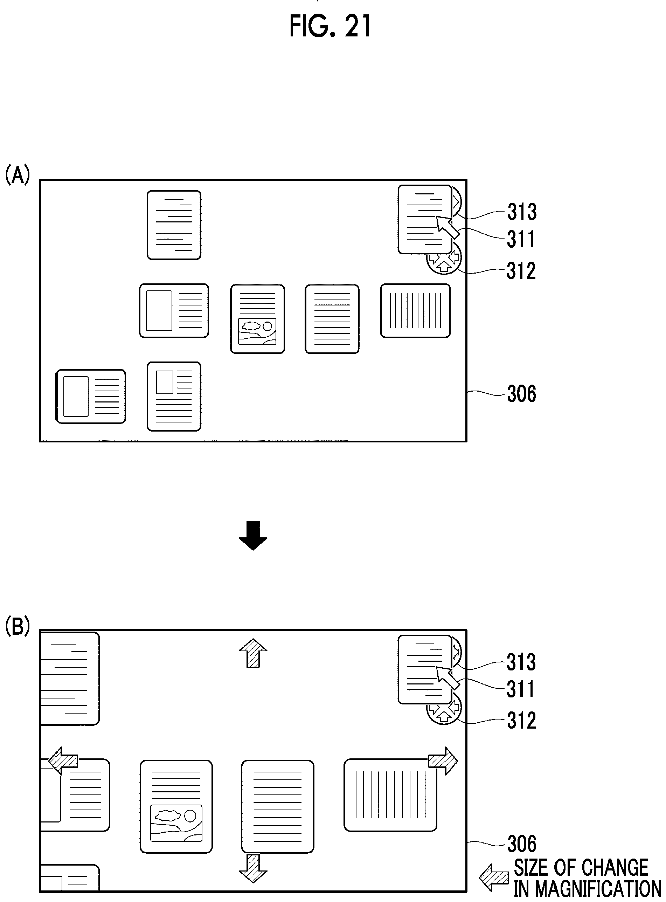

Fig. 21 is a diagram for describing enlarged display of the workspace using the symbol for enlargement: (A) illustrates a state where the icon is overlaid on the symbol for enlargement, and (B) illustrates a state where the enlarged display of the workspace continues;

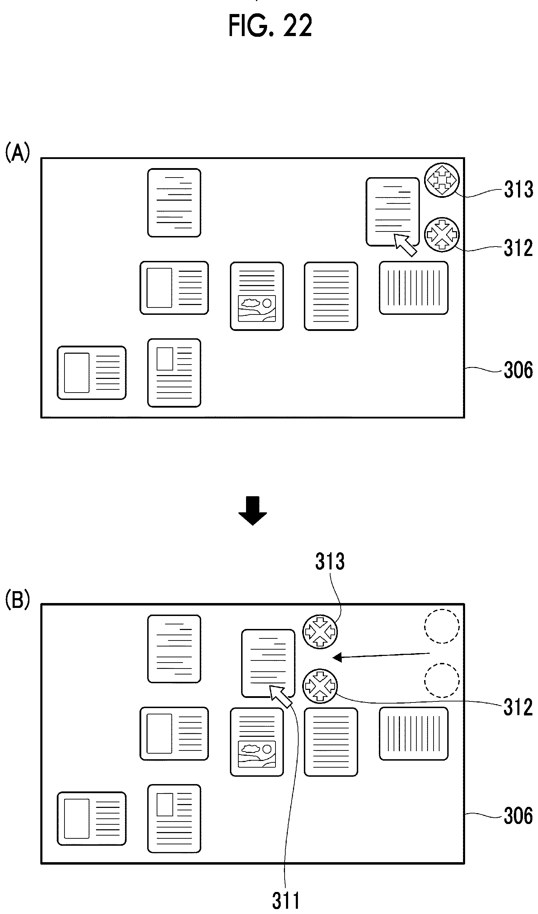

Fig. 22 is a diagram for describing following of two symbols in a case where the icon is dragged in a direction of separating from the symbol for reduction and the symbol for enlargement: (A) illustrates the drag of the icon in a state where the two symbols are displayed, and (B) illustrates a state of following of the two symbols in the drag direction of the icon;

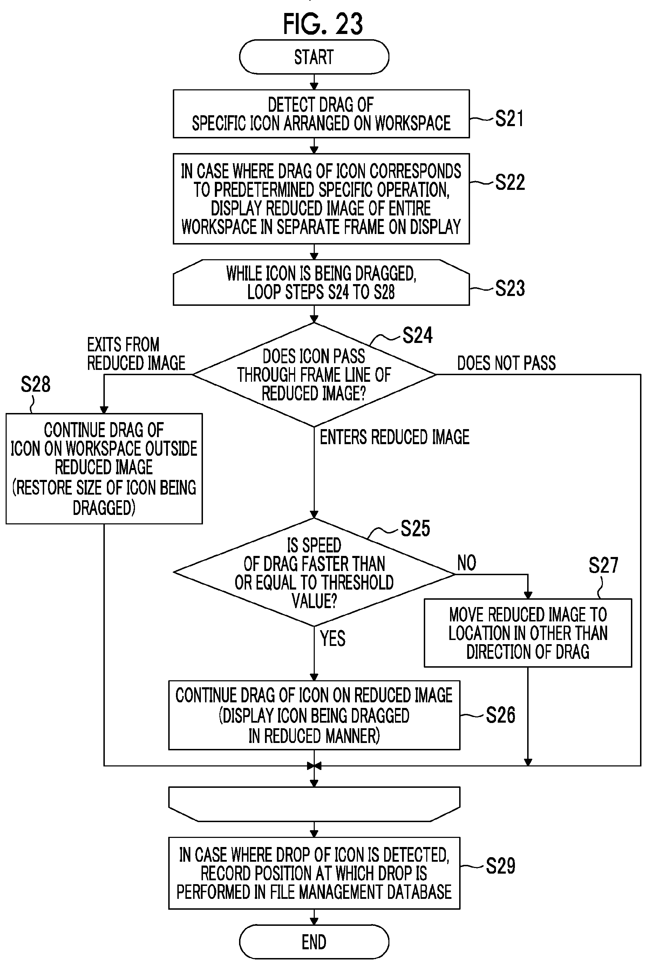

Fig. 23 is a flowchart for describing an example of a processing operation performed by a cloud server in Exemplary Embodiment 3;

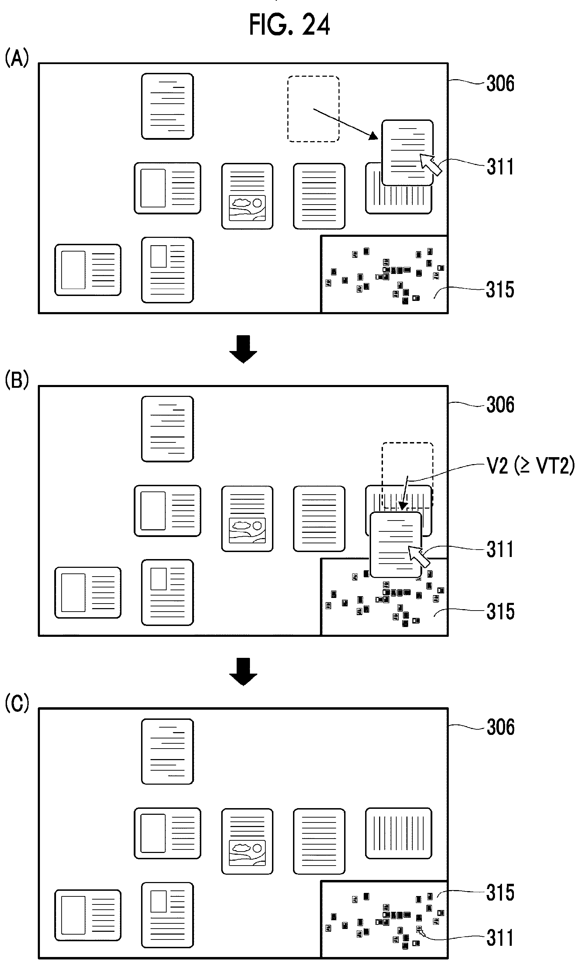

Fig. 24 is a diagram for describing an example in which superimposed display of a reduced image representing the entire workspace is performed on the display in a case where the drag of the icon is detected: (A) illustrates the display screen at the point in time of the start of the drag, (B) illustrates a case where the icon enters the reduced image at a speed V2 greater than or equal to a threshold value VT2, and (C) illustrates the drag of the icon within the reduced image;

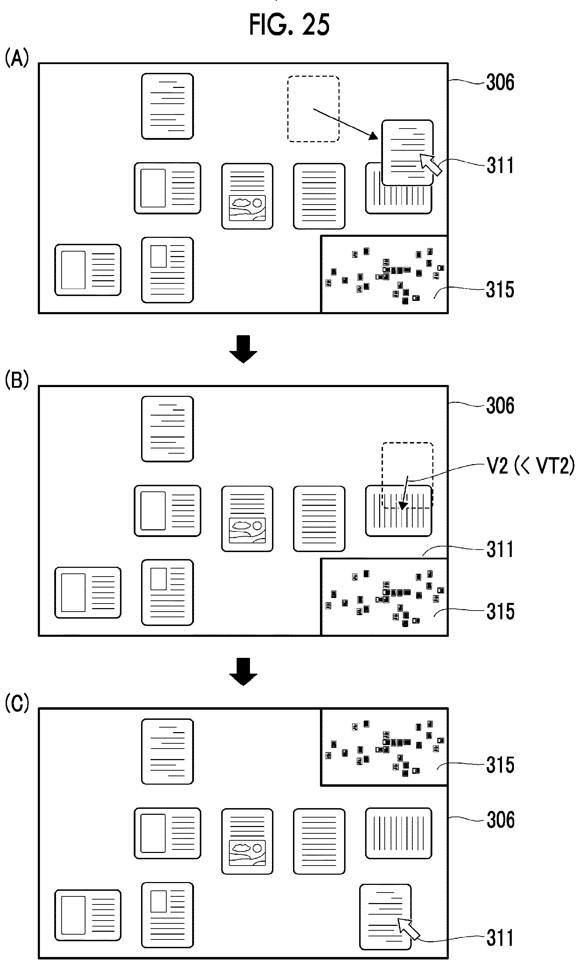

Fig. 25 is a diagram for describing another example in which the superimposed display of the reduced image representing the entire workspace is performed on the display in a case where the drag of the icon is detected: (A) illustrates the display screen at the point in time of the start of the drag, (B) illustrates a case where the icon enters the reduced image at the speed V2 less than the threshold value VT2, and (C) illustrates a state where a position of the reduced image is moved to a position at which the reduced image is retracted from the icon; and

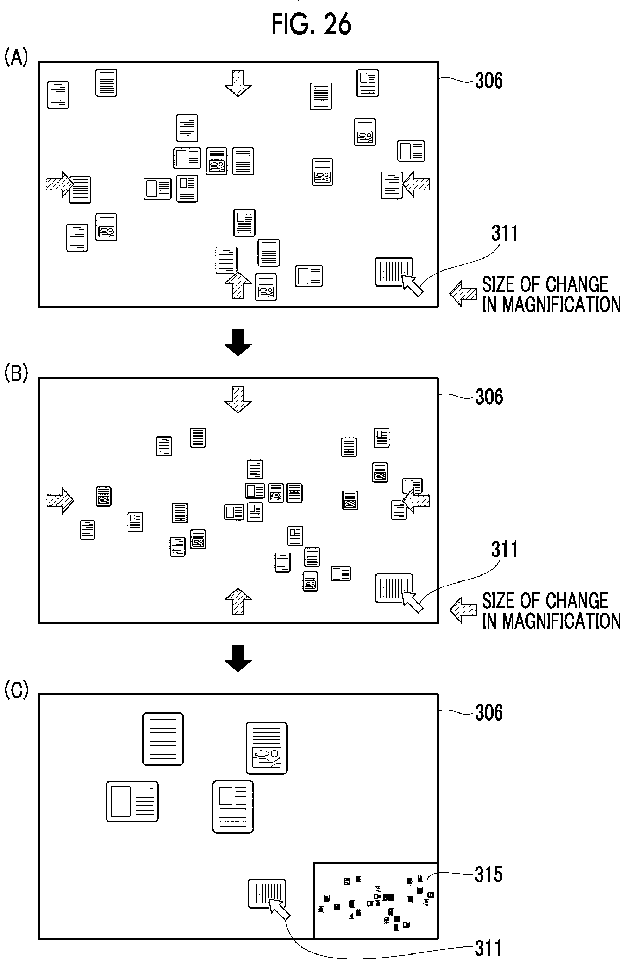

Fig. 26 is a diagram for describing an example of a change in display magnification of the workspace in a case where a display size of the workspace displayed on the display becomes smaller than a size of the display: (A) illustrates a display example during the drag, (B) illustrates a state where the entire workspace displayed on the display is reduced, and (C) illustrates a state where a combined screen of an image at the display magnification before the start of the reduced display and the reduced image is displayed.

### DETAILED DESCRIPTION OF THE INVENTION

Hereinafter, exemplary embodiments of the present invention will be described with reference to the drawings.

### <Exemplary Embodiment 1>

### <System Configuration>

Fig. 1 is a diagram for describing a summary of a cloud system 1 that provides a service for a workspace.

The workspace in the present exemplary embodiment is used for temporarily storing a document of work in progress.

The cloud system 1 is configured with a cloud server 20 that is connected to a network 10, and an information terminal that is used for accessing the cloud server 20 by a user who uses the service. The cloud server 20 in the present exemplary embodiment is an example of an information processing system.

In Fig. 1, a "user A" and a "user B" are illustrated as individual users, and a "group AA" and a "group BB" are illustrated as users (hereinafter, referred to as a "group user") of a group configured with a plurality of users.

The workspace is managed in units of users or group users .

In the example in Fig. 1, a desktop computer 30A used at an office, a laptop computer 30B used at a satellite office, a smartphone 30C used in, for example, an outdoor space during movement, and a laptop computer 30D used at home are illustrated as an example of the information terminal used for accessing the cloud server 20 by the user A.

In a case of Fig. 1, while different information terminals are used for each location in which the user A works, the same information terminal may be used at any of the locations.

### <Workspace and Display Range>

Figs. 2A and 2B are diagrams for describing a relationship between the entire workspace and a work screen. Fig. 2A illustrates a relationship between the entire workspace and a range displayed on the information terminal, and Fig. 2B illustrates an example of the work screen displayed on the information terminal.

In the workspace illustrated in Fig. 2A, an outer edge of the range displayed on the information terminal is illustrated by a broken line.

The workspace is used as a virtual workbench dedicated to the user. Thus, a method of using the workspace depends on the user.

Icons corresponding to files are arranged on the workspace. The files include, for example, a data file and a program file.

The icons corresponding to the files include a thumbnail in which an image of a head page or a representative page of a document is reduced, a thumbnail of a photograph, a thumbnail in which an image of a head frame or a representative frame of a video film is reduced, a design or a text representing a type of document, a design or a text representing an app, a tray or a folder indicating a storage location of the document or the like, and the like.

The icons can be arranged at any locations in the workspace.

However, the user tends to arrange icons of files having related meanings or attributes in one collection. The "one collection" refers to a state where a collection that can be distinguished from others is formed. For example, in the workspace illustrated in Fig. 2A, a plurality of collections are formed.

The icons can be arranged at any location designated by the user on the workspace illustrated in Fig. 2A. For example, one icon can be arranged to be overlaid on another icon. Here, "overlaid" includes not only a case of partial overlaying but also a case of overlaying of the entirety.

Only a range to which the user pays attention in the workspace is displayed on the work screen illustrated in Fig. 2B.

Such display is because in a case where the number of icons managed in the workspace is large, displaying the entire workspace on a display of the information terminal excessively increases a scale ratio, and contents of the icons are not easily identified.

Thus, a range in which the contents of the icons can be identified is cut out from the workspace and displayed on the work screen of the information terminal. In a case of the present exemplary embodiment, a scale that defines the range in which the contents of the icons can be identified is predetermined based on initial setting. However, a display magnification of the workspace displayed on the work screen may be variable based on an instruction of the user for the work screen. Seven icons are displayed on the work screen illustrated in Fig. 2B.

### <Configuration of Cloud Server>

Figs. 3A and 3B are diagrams for describing a hardware configuration example of the cloud server 20 used in Exemplary Embodiment 1. Fig. 3A illustrates an example of a hardware configuration, and Fig. 3B illustrates a structure example of data stored in an auxiliary storage device 204.

The cloud server 20 illustrated in Fig. 3A includes a processor 201 that controls an operation of the entire apparatus, a read only memory (ROM) 202 that stores a basic input output system (BIOS) or the like, a random access memory (RAM) 203 that is used as a work area of the processor 201, the auxiliary storage device 204 that stores data such as a program, and a communication interface (IF) 205 that is used for external communication. The processor 201 is connected to each unit through a signal line 206 such as a bus.

The processor 201, the ROM 202, and the RAM 203 function as a so-called computer. The processor 201 implements various functions through execution of the program. For example, the processor 201 implements a service for providing the workspace through execution of the program.

For example, semiconductor memory or a hard disk device is used in the auxiliary storage device 204. The program and data related to the workspace are stored in the auxiliary storage device 204. Here, the program includes an operation system and an app for the workspace.

The auxiliary storage device 204 stores a file management database 211 as the data related to the workspace.

The file management database 211 stores management data 211A, 211B, 211AA, and 211BB for each user.

In a case of Fig. 3B, the management data 211A is for the user A, and the management data 211B is for the user B. The management data 211AA is for the group user AA, and the management data 211BB is for the group user BB.

Fig. 4 is a diagram illustrating a data example of the file management database 211. In Fig. 4, a part of fields constituting the file management database 211 are represented.

In Fig. 4, an "identifier of file", a "file name", a "position of file", and a "path of file entity" are represented in a meaning of a file corresponding to an icon.

The "position of file" is provided as coordinates on the workspace. In a case of Fig. 4, the "position of file" is represented by an X coordinate and a Y coordinate.

Fig. 5 is a diagram for describing a functional configuration example of the cloud server 20 used in Exemplary Embodiment 1. A functional configuration illustrated in Fig. 5 is implemented through execution of the app by the processor 201.

In Fig. 5, an operation detection unit 201A, a display control unit 201B, and a file management unit 201C are represented as functions related to the workspace.

The operation detection unit 201A detects an operation (hereinafter, referred to as "drag") of moving a position of an icon on the workspace through an operation performed on the work screen of the information terminal. However, an instruction from the information terminal operated by the user is not limited to the drag. For example, the operation detection unit 201A also detects an operation of changing a range of the workspace displayed on the work screen or changing the display magnification.

The operation detection unit 201A in the present exemplary embodiment also acquires the position of the icon being dragged, a speed of the drag, and a direction of the drag.

In addition, the operation detection unit 201A detects an operation of the user performed on a symbol for changing a scale of the workspace displayed on the work screen. Here, the scale is an example of the display magnification. In a case where the icon being dragged is overlaid on the symbol, the operation detection unit 201A changes the scale of the workspace.

In a case of the present exemplary embodiment, the symbol includes a symbol for reduction and a symbol for enlargement. Here, the symbol is an example of an "operator" used for changing the display magnification.

Furthermore, the operation detection unit 201A detects an operation (hereinafter, referred to as "drop") of finishing the drag of the icon on the workspace.

The display control unit 201B controls generation of the work screen displayed on the information terminal operated by the user. The work screen generated by the display control unit 201B is transmitted to the information terminal of the corresponding user.

The display control unit 201B also has a function of changing the scale of the workspace displayed on the work screen in accordance with the position of the icon being dragged, the speed of the drag, and the direction of the drag.

Besides, the display control unit 201B controls display of the symbol for changing the scale on the work screen and movement of the symbol on the work screen in accordance with the position of the icon being dragged, the speed of the drag, and the direction of the drag.

The file management unit 201C manages a position at which the icon is dropped on the workspace, as the "position of file" in the file management database 211.

### <Configuration of Information Terminal>

Fig. 6 is a diagram for describing a hardware configuration example of the information terminal used in Exemplary Embodiment 1. In Fig. 6, a hardware configuration of the desktop computer 30A used at the office is illustrated.

The computer 30A illustrated in Fig. 6 includes a processor 301 that controls an operation of the entire apparatus, a ROM 302 that stores a BIOS or the like, a RAM 303 that is used as a work area of the processor 301, an auxiliary storage device 304 that stores data such as a program, an operation reception device 305 that receives an operation of the user, a display 306 that displays information about the workspace on the work screen, and a communication interface (IF) 307 that is used for external communication. The processor 301 is connected to each unit through a signal line 308 such as a bus.

The processor 301, the ROM 302, and the RAM 303 function as a so-called computer. The processor 301 implements various functions through execution of the program. For example, the processor 301 provides a service for the workspace through execution of the program.

For example, semiconductor memory or a hard disk device is used in the auxiliary storage device 304. The program and the like are stored in the auxiliary storage device 304. Here, the program includes an operation system.

For example, a keyboard or a mouse is used in the operation reception device 305.

The display 306 is, for example, a liquid crystal display or an organic EL display and is used for displaying the workspace.

### <Processing Operation of Cloud Server>

Fig. 7 is a flowchart for describing an example of a processing operation performed by the cloud server 20 (refer to Fig. 1) in Exemplary Embodiment 1. Symbol S in Fig. 7 denotes a step.

The processing operation illustrated in Fig. 7 is started in a state where the information about the workspace is displayed on the information terminal.

First, the processor 201 (refer to Figs. 3A and 3B) detects drag of a specific icon arranged on the workspace (step S1).

Next, in a case where the drag of the icon corresponds to a predetermined specific operation, the processor 201 starts reduced display of the workspace (step S2).

In a case of the present exemplary embodiment, even in a case where the drag of the icon is detected, the reduced display of the workspace is not executed in response to the drag of the icon that does not correspond to the specific operation.

For example, the specific operation is such that a distance of the drag is greater than or equal to a predetermined distance, the speed of the drag is greater than or equal to a predetermined speed, another icon is present in the direction of the drag, or a distance between the icon of a target of the drag and an end portion of the display is less than a predetermined distance.

In a case where the processor 201 detects drop of the icon on the workspace (step S3), the processor 201 records information about a position at which the icon is dropped, in the file management database 211 (step S4).

### <Display Example of Work Screen>

### <Example 1>

Fig. 8 is a diagram for describing an example of the reduced display of the workspace in a case where a distance L1 of drag is greater than or equal to a predetermined distance LT1. (A) illustrates a display screen at a point in time of a start of the drag, (B) illustrates the display screen immediately before a start of the reduced display, and (C) illustrates the display screen after the reduced display;

A starting point of the distance L1 is the position of the icon before the start of the drag. In addition, the distance L1 may be a straight distance between the starting point and a current position of the icon being dragged, or may be a distance along a path of the drag.

In (A) of Fig. 8, a cursor 311 is moved onto the icon of the target of the drag, and the drag is started.

In a case of (B) of Fig. 8, the direction of the drag is a right end side of the display 306. In a case of (B) of Fig. 8, the distance L1 of the drag is greater than or equal to the predetermined distance LT1.

In a case where the distance L1 of the drag is greater than or equal to the predetermined distance LT1, the processor 201 determines that the specific operation is executed, and starts the reduced display.

While the drag of the icon continues, reduction of the display magnification of the workspace displayed on the display 306 continues.

In (C) of Fig. 8, reduction of the display magnification is represented by reduction of sizes of the icons displayed on the work screen and an increase in number of displayed icons.

In a case of the present exemplary embodiment, while the drag of the icon continues, reduction of the display magnification of the workspace displayed on the display 306 also continues. Consequently, an image of the workspace displayed on the display 306 is gradually decreased. In other words, in a case where the display magnification is gradually decreased, the range of the workspace displayed on the display 306 is gradually enlarged.

Thus, even in a case where the user does not perceive arrangement of the entire workspace at the point in time of the start of the drag of the icon, the user during the drag can find a location at which the drop is to be performed.

In the example in (C) of Fig. 8, reduction of the image is executed toward a position on the workspace that is positioned at a center of the display 306 at the point in time of the start of the drag. Thus, information about a part that is not displayed before the start of the drag can be perceived in not only the direction of the drag but also all directions.

Thus, movement of the icon to the part that is not displayed on the display 306 at the point in time of the start of the drag is facilitated.

The processor 201 controls a speed of reduction of a display size of the workspace displayed on the display 306 to be greater than the speed of the drag of the icon on the display 306.

Thus, reaching of the icon to the end portion of the display 306 due to untimely reduction of the workspace does not occur. In other words, a control of the range of the workspace displayed on the work screen is implemented in accordance with the speed of the drag.

### <Example 2>

Fig. 9 is a diagram for describing an example of the reduced display of the workspace in a case where a distance L2 between the icon of the target of the drag and the end portion of the display 306 is less than a predetermined distance LT2. Here, (A) illustrates the display screen at the point in time of the start of the drag, (B) illustrates the display screen immediately before the start of the reduced display, and (C) illustrates the display screen after the reduced display.

In (A) of Fig. 9, the cursor 311 is moved onto the icon of the target of the drag, and the drag is started. In a case of (B) of Fig. 9, the direction of the drag is the right end side of the display 306. In (B) of Fig. 9, the distance L2 to a right end in the direction of the drag is less than the predetermined distance LT2.

In a case where the distance L2 of the drag is less than the predetermined distance LT2, the processor 201 determines that the specific operation is executed, and starts the reduced display.

Even in a case of (C) of Fig. 9, while the drag of the icon continues, reduction of the workspace displayed on the display 306 continues.

In other words, while the icon being dragged is positioned near the center of the display 306, the processor 201 does not execute the reduced display of the workspace displayed on the display 306. In a case where the icon being dragged approaches an outer edge of the display 306, the processor 201 executes the reduced display of the workspace.

Even while the icon being dragged is positioned near the center, the reduced display of the workspace may be started in a case where the icon is being dragged. However, a speed of reduction in a case where the icon being dragged is positioned near the center of the display 306 or the work screen may be less than the speed of reduction in a case where the icon being dragged is positioned in an outer edge portion of the display 306 or an outer edge portion of the work screen.

### <Example 3>

Fig. 10 is a diagram for describing an example of the reduced display of the workspace in a case where a speed V1 of the drag is greater than or equal to a predetermined speed VT1. Here, (A) illustrates the display screen at the point in time of the start of the drag, (B) illustrates the display screen immediately before the start of the reduced display, and (C) illustrates the display screen after the reduced display.

In (A) of Fig. 10, the cursor 311 is moved onto the icon of the target of the drag, and the drag is started.

In a case of (B) of Fig. 10, the direction of the drag is the right end side of the display 306. In (B) of Fig. 10, the speed V1 of the drag is greater than or equal to the predetermined speed VT1.

Here, the speed V1 of the drag is defined as a speed in a workflow. However, the speed V1 may be defined as a speed on the display 306.

In a case where the speed V1 of the drag is greater than or equal to the predetermined speed VT1, the processor 201 determines that the specific operation is executed, and starts the reduced display.

In (C) of Fig. 10, while the speed V1 of the drag in the workflow is greater than or equal to the predetermined speed VT1, reduction of the workspace displayed on the display 306 continues.

### <Example 4>

Fig. 11 is a diagram for describing an example of the reduced display of the workspace in a case where another icon is present in the direction of the drag. Here, (A) illustrates the display screen at the point in time of the start of the drag, and (B) illustrates the display screen after the reduced display in a case where the other icon is present in the direction of the drag.

In (A) of Fig. 11, the cursor 311 is moved onto the icon of the target of the drag, and the drag is started. A case of (B) of Fig. 11 is a case where the other icon is present in a right direction of the display 306 on the workspace. Thus, the processor 201 determines that the specific operation is executed, and starts the reduced display.

Fig. 12 is a diagram for describing an example of the reduced display of the workspace in a case where the other icon is not present in the direction of the drag. Here, (A) illustrates the display screen at the point in time of the start of the drag, and (B) illustrates the display screen in a case where the other icon is not present in the direction of the drag.

In a case of (A) of Fig. 12, the other icon is not present in the direction of the drag of the icon including the part not displayed on the display 306. Thus, the reduced display of the workspace is not started.

In (B) of Fig. 12, in a case where the icon of the drag reaches the end portion of the display 306, the part that is not displayed before the start of the drag gradually appears. In other words, the range of the workspace displayed on the display 306 is moved in the direction of the drag, and a corresponding image is displayed on the display 306.

### <Example 5>

Fig. 13 is a diagram for describing an example of a change in display magnification of the workspace in a case where the icon being dragged stops at a specific position, or a case where the icon is dropped. Here, (A) illustrates a display example during the drag, and (B) illustrates a display example in a case where, for example, the icon stops at the specific position. The change in display magnification illustrated in Example 5 is used in combination with Example 1 to Example 4.

On the display screen illustrated in (A) of Fig. 13, the drag of the icon continues, and thus, reduction of the workspace displayed on the display 306 continues.

However, in a case where the icon is dropped or approaches a position at which the drop is to be performed, not only the reduced display of the workspace is stopped, but also a return is made to the display magnification immediately before the start of the drag. By returning the display magnification, specifying of the position at which the icon is to be dropped is facilitated.

### <Example 6>

Fig. 14 is a diagram for describing another example of the change in display magnification of the workspace in a case where the icon being dragged stops at the specific position. Here, (A) illustrates a display example during the drag, and (B) illustrates a display example in a case where, for example, the icon stops at the specific position. The change in display magnification illustrated in Example 6 is also used in combination with Example 1 to Example 4.

In a case of (B) of Fig. 14, the display magnification of the workspace in the display 306 is not restored on the entire screen, and restoration applies to only an image part corresponding to a range of the icon. That is, enlarged display of only an image part around the icon is performed.

In (B) of Fig. 14, superimposed display of a partial image 320 in which a surrounding area of the icon being dragged is enlarged in the workspace is performed.

### <Example 7>

Fig. 15 is a diagram for describing another example of the reduced display in a case where the drag of the icon corresponds to the specific operation. Here, (A) illustrates the display screen at the point in time of the start of the drag, and (B) illustrates the display screen after switching to a magnification at which the entire workspace is displayed on the display 306.

While an example in which display of the workspace displayed on the display 306 is gradually reduced is described in a case of Example 1 to Example 4, the display magnification is switched at once in the present example.

In (B) of Fig. 15, in a case where the drag of the icon corresponds to the specific operation, the entire workspace is immediately displayed on the display 306. Thus, the user can perceive arrangement of the entire workspace and then, decide a drag destination of the icon.

In a case of (B) of Fig. 15, the icon being dragged and the cursor 311 are forcibly moved to near the center of the display 306 in connection with switching to a state where the entire workspace is displayed on the display 306.

While a position of the cursor 311 is forcibly changed, the cursor 311 is positioned near the center of the display 306. Thus, the distance of the drag is decreased even in a case of dragging the icon in any direction.

### <Exemplary Embodiment 2>

In the present exemplary embodiment, a case where a symbol that receives a change in display magnification of the workspace is displayed on the display 306 (refer to Fig. 6) will be described.

A configuration of the cloud system 1 (refer to Fig. 1) described in Exemplary Embodiment 2 is the same as Exemplary Embodiment 1. In addition, a configuration of the cloud server 20 (refer to Fig. 1) that provides the service for the workspace is the same as Exemplary Embodiment 1.

Fig. 16 is a flowchart for describing an example of a processing operation performed by the cloud server 20 (refer to Fig. 1) in Exemplary Embodiment 2.

Even in a case of the processing operation illustrated in Fig. 16, the processor 201 (refer to Figs. 3A and 3B) detects the drag of the specific icon arranged on the workspace (step S11).

Next, in a case where the drag of the icon corresponds to the predetermined specific operation, the processor 201 displays the symbol for reduction and the symbol for enlargement on the workspace (step S12).

Then, while the icon is being dragged, the processor 201 loops steps S14 to S18 (step S13).

First, the processor 201 determines whether or not the icon is dragged onto a symbol (step S14). Here, determination results in three ways.

In a case where the icon is not dragged onto the symbol, the processor 201 determines whether or not a distance between the icon being dragged and the symbol is greater than or equal to a threshold value (step S15).

In a case where the distance between the icon and the symbol is less than the threshold value, the processor 201 obtains a negative result in step S15 and returns to step S13.

Meanwhile, in a case where the distance between the icon and the symbol is greater than or equal to the threshold value, the processor 201 obtains a positive result in step S15 and moves the symbol such that the distance is less than the threshold value (step S18) . This movement of the symbol means that the symbol follows the drag of the icon. During the drag, the distance between the symbol and the icon is maintained at the threshold value in step S15.

In the determination in step S14, in a case where a determination that the icon is dragged onto the symbol for reduction is made, the processor 201 reduces the entire workspace while the icon is present on the symbol for reduction (step S16). Then, the processor 201 returns to step S13.

Meanwhile, in the determination in step S14, while the icon is present on the symbol for enlargement, the entire workspace is enlarged (step S17). Then, the processor 201 returns to step S13.

In a case where the drop of the icon is detected, a position at which the drop is performed is recorded in the file management database 211 (step S19).

In a case of the present exemplary embodiment, the display magnification of the workspace displayed on the display 306 can be adjusted based on an instruction of the user.

### <Display Example of Work Screen>

### <Example 1>

Fig. 17 is a diagram for describing an example of displaying only a symbol for reduction 312 in a case where the drag of the icon is detected. (A) illustrates the display screen at the point in time of the start of the drag, and (B) illustrates a state where the symbol for reduction 312 is displayed on the display 306 as a result of detecting the drag of the icon performed using the cursor 311.

In a case of (B) of Fig. 17, only the symbol for reduction 312 is displayed. In addition, the symbol for reduction 312 is displayed ahead in the drag direction of the icon.

Fig. 18 is a diagram for describing the reduced display of the workspace using the symbol for reduction 312. Here, (A) illustrates a state where the icon is overlaid on the symbol for reduction 312, and (B) illustrates a state where the reduced display of the workspace continues.

The reduced display of the workspace is started at a sign of overlaying of the icon on the symbol for reduction 312. In (B) of Fig. 18, the workspace is reduced in a direction toward the center of the display 306. In (A) of Fig. 18, the part not displayed gradually appears on the display 306. The reduced display of the workspace continues while the icon is overlaid on the symbol for reduction 312.

### <Example 2>

Fig. 19 is a diagram for describing following of the symbol for reduction 312 in a case where the icon is dragged in a direction of separating from the symbol for reduction 312. Here, (A) illustrates the drag of the icon in a state where the symbol for reduction 312 is displayed, and (B) illustrates a state of following of the symbol for reduction 312 in the drag direction of the icon.

The position of the icon in (B) of Fig. 19 moves in a lower-left direction of the display 306 with respect to the position of the icon in (A) of Fig. 19.

Along with this movement, the symbol for reduction 312 moves in the lower-left direction of the display 306 in a state where a constant distance to the icon being dragged is maintained. That is, the symbol for reduction 312 follows the icon being dragged.

Since the symbol for reduction 312 follows the icon, the icon can be overlaid on the symbol for reduction 312 by slightly returning the icon in a direction opposite to the drag direction. In a case where the icon is overlaid on the symbol for reduction 312, the reduced display of the workspace is started.

### <Example 3>

Fig. 20 is a diagram for describing an example in which both of the symbol for reduction 312 and a symbol for enlargement 313 are displayed in a case where the drag of the icon is detected. Here, (A) illustrates the display screen at the point in time of the start of the drag, and (B) illustrates a state where the symbol for reduction 312 and the symbol for enlargement 313 are displayed on the display 306 as a result of detecting the drag of the icon performed using the cursor 311.

Even in a case of (B) of Fig. 20, the symbol for reduction 312 and the symbol for enlargement 313 are displayed ahead in the drag direction of the icon.

Fig. 21 is a diagram for describing enlarged display of the workspace using the symbol for enlargement 313. Here, (A) illustrates a state where the icon is overlaid on the symbol for enlargement 313, and (B) illustrates a state where the enlarged display of the workspace continues.

The enlarged display of the workspace is started at a sign of overlaying of the icon on the symbol for enlargement 313. In (B) of Fig. 21, an image corresponding to the workspace is enlarged outward from the center of the display 306, and arrangement of other icons present around the drag destination of the icon is easily perceived. The enlarged display of the workspace continues while the icon is overlaid on the symbol for enlargement 313.

### <Example 4>

Fig. 22 is a diagram for describing following of the two symbols 312 and 313 in a case where the icon is dragged in a direction of separating from the symbol for reduction 312 and the symbol for enlargement 313. Here, (A) illustrates the drag of the icon in a state where the two symbols 312 and 313 are displayed, and (B) illustrates a state of following of the two symbols 312 and 313 in the drag direction of the icon.

The icon in (B) of Fig. 22 moves in a left direction of the display 306 from the position of the icon in (A) of Fig. 22 as a starting point. Along with this movement, the symbol for reduction 312 and the symbol for enlargement 313 also follow the icon being dragged, at a constant distance.

Since the symbol for reduction 312 and the symbol for enlargement 313 follow the icon, the icon can be overlaid on the symbol for reduction 312 or the symbol for enlargement 313 by slightly returning the icon in the direction opposite to the drag direction. In a case where the icon is overlaid on the symbol for enlargement 313, the enlarged display of the workspace is started.

### <Exemplary Embodiment 3>

In the present exemplary embodiment, a case where the superimposed display of an image in which the entire workspace is reduced is performed on a part of the display 306 (refer to Fig. 6) upon detection of the drag of the icon will be described.

A configuration of the cloud system 1 (refer to Fig. 1) described in Exemplary Embodiment 3 is the same as Exemplary Embodiment 1. In addition, a configuration of the cloud server 20 (refer to Fig. 1) that provides the service for the workspace is the same as Exemplary Embodiment 1.

Fig. 23 is a flowchart for describing an example of a processing operation performed by the cloud server 20 (refer to Fig. 1) in Exemplary Embodiment 3.

Even in a case of the processing operation illustrated in Fig. 23, the processor 201 (refer to Figs. 3A and 3B) detects the drag of the specific icon arranged on the workspace (step S21) .

Next, in a case where the drag of the icon corresponds to the predetermined specific operation, the processor 201 displays a reduced image of the entire workspace in a separate frame on the display 306 (step S22).

Then, while the icon is being dragged, the processor 201 loops steps S24 to S28 (step S23).

First, the processor 201 determines whether or not the icon passes through a frame line of the reduced image (step S24). Here, determination results in three ways.

In a case where the icon does not pass through the frame line of the reduced image, the processor 201 repeats the determination in step S24.

In a case where the icon enters the reduced image, the processor 201 determines whether or not a speed V2 of the drag is greater than or equal to a threshold value VT2 (step S25).

In a case where the speed V2 of the drag is greater than or equal to the threshold value VT2, the processor 201 obtains a positive result in step S25 and continues the drag of the icon on the reduced image (step S26). The reduced display of the icon being dragged is also performed on the reduced image. Then, the processor 201 returns to step S23.

Meanwhile, in a case where the speed V2 of the drag is less than the threshold value VT2, the processor 201 obtains a negative result in step S25 and moves the reduced image to a location in other than the direction of the drag (step S27) . Then, the processor 201 returns to step S23.

In step S24, in a case where a determination that the icon exits from the reduced image is made, the processor 201 continues the drag of the icon on the workspace outside the reduced image (step S28). The processor 201 restores a size of the icon being dragged. Then, the processor 201 returns to step S23.

In a case where the processor 201 detects the drop of the icon, the processor 201 records the position at which the drop is performed, in the file management database 211 (step S29) .

### <Display Example of Work Screen>

### <Example 1>

Fig. 24 is a diagram for describing an example in which the superimposed display of a reduced image 315 representing the entire workspace is performed on the display 306 (refer to Fig. 6) in a case where the drag of the icon is detected. Here, (A) illustrates the display screen at the point in time of the start of the drag, (B) illustrates a case where the icon enters the reduced image 315 at the speed V2 greater than or equal to the threshold value VT2, and (C) illustrates the drag of the icon within the reduced image 315.

In a case of (A) of Fig. 24, in a case where the drag of the icon is detected, the superimposed display of the reduced image 315 representing the entire workspace is performed at a lower-right corner of the display 306.

In a case of the present exemplary embodiment, even in a case where the drag of the icon is started, the display magnification of the workspace being displayed does not change . In other words, the reduced display of the workspace is not performed.

While the reduced image 315 representing the entire workspace is displayed at the lower-right corner of the display 306 in (A) of Fig. 24, a position of display is not limited to the lower-right corner.

The position at which the reduced image 315 is displayed may be predetermined. In addition, the reduced image 315 may be present ahead in the direction of the drag of the icon.

By causing the processor 201 to arrange the reduced image 315 ahead in the direction of the drag of the icon, switching between the drag of the icon on the work screen and the drag of the icon on the reduced image 315 is facilitated.

In a case where the position at which the reduced image 315 is displayed is different from the direction of the drag, the user needs to move the icon onto the reduced image 315 by changing the direction of the drag.

In a case where the icon enters the reduced image 315 at the speed V2 greater than or equal to the threshold value VT2 as illustrated in (B) of Fig. 24, the icon being dragged and the cursor 311 are captured in the reduced image 315, and the drag continues on the reduced image 315 as illustrated in (C) of Fig. 24.

The reduced image 315 is appropriate for perceiving the entire workspace. Thus, by dragging the icon onto the reduced image 315, a time period required for dragging the icon to a target location is shortened, compared to a case of dragging the icon outside the reduced image 315.

In a case where the drop of the icon or a stoppage of the drag of the icon is detected, the superimposed display of the reduced image 315 is stopped. At this point, information about a surrounding area of a location at which the icon is dropped, or a location at which the icon is stopped may be displayed on the display 306.

However, a content that is displayed in real dimensions on the display 306 as a background of the reduced image 315 subjected to the superimposed display may be changed following the drag of the icon within the reduced image 315.

### <Example 2>

Fig. 25 is a diagram for describing another example in which the superimposed display of the reduced image 315 representing the entire workspace is performed on the display 306 (refer to Fig. 6) in a case where the drag of the icon is detected. Here, (A) illustrates the display screen at the point in time of the start of the drag, (B) illustrates a case where the icon enters the reduced image 315 at the speed V2 less than the threshold value VT2, and (C) illustrates a state where a position of the reduced image 315 is moved to a position at which the icon is avoided.

Contents of display in (A) of Fig. 25 and (B) of Fig. 25 are the same as (A) of Fig. 24 and (B) of Fig. 24. The speed V2 of the drag in a case of crossing the frame line of the reduced image 315 is a difference. In a case of (B) of Fig. 25, the speed V2 of the drag is less than the threshold value VT2.

Thus, in (C) of Fig. 25, the icon does not penetrate into the reduced image 315, and movement of the icon within a space displayed as the background of the reduced image 315 continues. At this point, the reduced image 315 is retracted to a location in other than the direction of the drag of the icon such that visual recognition of a space in which the icon is dragged is not impeded.

In a case of (C) of Fig. 25, the reduced image 315 is moved to an upper-right corner of the display 306. The upper-right corner of the display 306 is on a side opposite to the direction of the drag of the icon. Thus, the reduced image 315 after movement does not impede the drag of the icon.

However, a movement destination of the reduced image 315 may be an upper-left corner or a lower-left corner of the display 306 or other locations.

### <Other Exemplary Embodiments>

(1) While the exemplary embodiments of the present invention are described above, a technical scope of the present invention is not limited to a scope disclosed in the above exemplary embodiments. As is apparent from the disclosure of the claims, the above exemplary embodiments to which various modifications or improvements are carried out also fall in the technical scope of the present invention.
(2) In the description of Example 5 in Exemplary Embodiment 1, a case where the display magnification of the workspace at a stoppage of the icon being dragged at the specific position or at the drop of the icon returns to a magnification before the start of the drag is described. At this point, the superimposed display of the reduced image 315 (refer to Fig. 24) illustrated in Exemplary Embodiment 3 may be performed.

In addition, the superimposed display of the reduced image 315 may be executed in a case where the display size of the workspace displayed on the display 306 becomes smaller than a size of the display 306.

Fig. 26 is a diagram for describing an example of a change in display magnification of the workspace in a case where the display size of the workspace displayed on the display 306 becomes smaller than the size of the display 306. Here, (A) illustrates a display example during the drag, (B) illustrates a state where the entire workspace displayed on the display 306 is reduced, and (C) illustrates a state where a combined screen of an image at the display magnification before the start of the reduced display and the reduced image 315 is displayed.

In a case of (C) of Fig. 26, the drag of the icon continues. In a case of (C) of Fig. 26, during the drag of the icon, the user can check the position of the icon in the entire workspace and other icons around the icon being dragged at the same time.

(3) In Exemplary Embodiment 1, even in a case where the drag of the icon is detected, the reduced display of the workspace is not executed in response to the drag of the icon that does not correspond to the specific operation. However, in the same manner as Exemplary Embodiment 2 and Exemplary Embodiment 3, the reduced display of the workspace displayed on the work screen may be executed on a condition that the drag of the icon is detected.

(4) In the above exemplary embodiments, a case where the service for the workspace is provided through the cloud server 20 (refer to Fig. 1) is described. However, the service is not limited to a service on a cloud. For example, the workspace may be provided as a function on a server that is provided on a local area network (LAN).

In addition, for example, a function of the workspace may be provided as a function of the program that operates on the computers 30A, 30B, and 30D (refer to Fig. 1) and the smartphone 30C (refer to Fig. 1) operated by the user.

Here, the program may be any of the operation system, firmware, and the application program. In addition, in this case, the computers 30A, 30B, and 30D and the smartphone 30C are an example of the information processing system.

(5) In the description of the above exemplary embodiments, the icons corresponding to the files can be arranged at any locations in the workspace, and one icon can be overlaid on another icon. However, only one icon may be arrangeable on one section arranged in a lattice form, as in a so-called desktop screen or a home screen.

(6) In the description of the above exemplary embodiments, a case of using the workspace as a temporary storage location of the document of work in progress is described. However, the workspace is not limited to the temporary storage location of the document, and the document does not need to be a work in progress.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 1:: cloud system
- 10:: network
- 20:: cloud server
- 30A, 30B, 30D: computer
- 30C:: smartphone
- 211:: file management database
- 311:: cursor
- 312, 313:: symbol
- 315:: reduced image

## Claims

1. An information processing system comprising:
a processor configured to:
in a case where only a part of a space for work in which an icon is arranged is displayed on a display, reduce a display magnification of the space for work upon detection of a specific operation of changing a position of the icon.

2. The information processing system according to claim 1, wherein the processor is configured to:
gradually reduce the display magnification.

3. The information processing system according to claim 2, wherein the processor is configured to:
control reduction of the display magnification in accordance with the position of the icon on the display.

4. The information processing system according to claim 2, wherein the processor is configured to:
increase a speed of a change in the display magnification in a case where the icon is positioned near an end portion of the display, compared to a case where the icon is positioned near a center of the display.

5. The information processing system according to claim 2, wherein the processor is configured to:
reduce the display magnification faster than movement of the icon.

6. The information processing system according to claim 1, wherein the processor is configured to:
switch to a magnification at which the entire space for work is displayable on the display.

7. The information processing system according to claim 2 or 6, wherein the processor is configured to:
also reduce a size of the icon in accordance with reduction of the display magnification.

8. The information processing system according to claim 6 or claim 7 citing claim 6, wherein the processor is configured to:
forcibly move the icon to near a center of the display.

9. The information processing system according to any one of claims 1 to 8,
wherein the specific operation is an operation of moving the icon to a position further than a predetermined distance from the first position.

10. The information processing system according to any one of claims 1 to 8,
wherein the specific operation is an operation of moving the icon to a position within a predetermined distance from an end portion of the display.

11. The information processing system according to any one of claims 1 to 8,
wherein the specific operation is an operation of moving the icon at a speed faster than a predetermined threshold value.

12. The information processing system according to any one of claims 1 to 8,
wherein the specific operation is an operation of moving the icon in a direction in which another icon that is not displayed on the display is present.

13. The information processing system according to claim 1, wherein the processor is configured to:
add an operator for reducing the display magnification around the icon, upon detection of the operation of changing the position of the icon.

14. The information processing system according to claim 13, wherein the processor is configured to:
in a case where the icon is overlaid on the operator, execute reduction of the display magnification.

15. The information processing system according to claim 13 or 14, wherein the processor is configured to:
gradually reduce the display magnification while the icon is overlaid on the operator.

16. The information processing system according to claim 13, wherein the processor is configured to:
in a case where the icon moves in a direction of separating from the operator by a predetermined distance or more, cause the operator to follow movement of the icon.

17. The information processing system according to claim 1, wherein the processor is configured to:
in a case where a size of the space for work after the reduction becomes smaller than the display:
return the display magnification of the space for work to a magnification before the reduction, and
perform superimposed display of an image in which the entire space for work is reduced, on the display.

18. The information processing system according to claim 1, wherein the processor is configured to:
perform superimposed display of an image in which the entire space for work is reduced, on the display upon detection of the operation of changing the position of the icon.

19. The information processing system according to claim 17 or 18, wherein the processor is configured to:
in a case where a speed of movement of the icon is less than a predetermined speed, retract the image in which the entire space for work is reduced, from a direction of movement of the icon.

20. The information processing system according to claim 17 or 18, wherein the processor is configured to:
in a case where a speed of movement of the icon is faster than a predetermined speed, permit movement of the icon onto the image in which the entire space for work is reduced.

21. The information processing system according to claim 1, wherein the processor is configured to:
in a case where movement of the icon stops for a predetermined time period or more, perform superimposed display of an image in which only a surrounding area of the icon is enlarged.

22. The information processing system according to claim 1, wherein the processor is configured to:
in a case where movement of the icon stops for a predetermined time period or more, return the display magnification of the space for work to a magnification before the reduction.

23. A program causing a computer to implement:
a function of detecting, in a case where only a part of a space for work in which an icon is arranged is displayed on a display, a specific operation of changing a position of the icon; and
a function of reducing a display magnification of the space for work upon detection of the specific operation.

24. An information processing method comprising:
detecting, in a case where only a part of a space for work in which an icon is arranged is displayed on a display, a specific operation of changing a position of the icon; and
reducing a display magnification of the space for work upon detection of the specific operation.
